# EUROPEAN PATENT APPLICATION

(11) **EP 4 458 780 A1**
(43) Date of publication of application: **06.11.2024**
(21) Application number: 22915159.2
(22) Date of filing: 30.12.2022
(51) Int. Cl.: C02F 5/00, A47L 15/42

(54) **WATER SOFTENER**

(30) Priority: 30.12.2021 CN 202111648895
(71) Applicant: Sanhua Aweco Appliance Systems (Wuhu) Co., Ltd., Wuhu, Anhui 241003 (CN)
(72) Inventor: ZHANG, Jianjun, Wuhu, Anhui 241002 (CN)
(74) Representative: Maikowski & Ninnemann Patentanwälte Partnerschaft mbB
(86) International application number: PCT/CN2022/143839
(87) International publication number: WO 2023/125910

(57) **Abstract**

A water softener, comprising a housing and a first electrode assembly, wherein the housing is provided with an accommodating cavity, the first electrode assembly is located in the accommodating cavity, and the first electrode assembly is roughly plate-shaped. The water softener is provided with a main water inlet and a main water outlet; the first electrode assembly is provided with a first water inlet and a first water outlet; the first water inlet is located on one side of the first electrode assembly, and the first water outlet is located on the other side of the first electrode assembly; and the main water inlet is in communication with the first water inlet, and the main water outlet is in communication with the first water outlet. The water softener comprises a main water inlet, a main water outlet, a first water inlet, a first water outlet and a first electrode assembly, the first water inlet is located on one side of the first electrode assembly, and the first water outlet is located on the other side of the first electrode assembly, so that a water softening path is long, thereby increasing the softening efficiency of the water softener.

## Description

The present application claims the priority to Chinese Patent Application No. 202111648895.6, titled "WATER SOFTENER", filed with the China National Intellectual Property Administration on Dec. 30, 2021, the entire disclosure of which is incorporated herein by reference.

### FIELD

The present application relates to the technical field of home appliances, and in particular to a water softener.

### BACKGROUND

An existing water softener includes a housing and an electrode assembly. The housing is provided with an accommodation cavity, and the electrode assembly is located in the accommodation cavity. The electrode assembly includes multiple first electrode plates and multiple second electrode plates arranged alternatively. A water outlet of the water softener is located at a center position of the housing, and a water inlet thereof is located at a middle position of a side of the housing. A through hole is provided roughly at a center position of the electrode assembly, and the through hole is in communication with the water outlet of the water softener. During operation of the water softener, water enters the accommodation cavity through the water inlet, then flows between a periphery of the electrode assembly and an inner wall of the housing and enters into spaces between electrode plates, and then converges at the through hole of the electrode assembly and flows out of the water softener through the water outlet. In this type of water softener, water simply flows through only part of the electrode plates. The flow path of the water during softening is relatively short, and softening efficiency needs to be further improved.

### SUMMARY

A water softener having a good water softening performance is provided.

The water softener includes a housing and a first electrode assembly,
the water softener includes an accommodation cavity, the first electrode assembly is located in the accommodation cavity, and the first electrode assembly is roughly of a plate shape;
the water softener is provided with a main water inlet and a main water outlet, and the first electrode assembly is provided with a first water inlet and a first water outlet; and
the first water inlet is located at one side of the first electrode assembly, the first water outlet is located at the other side of the first electrode assembly, the main water inlet is in communication with the first water inlet, and the main water outlet is in communication with the first water outlet.

Such water softener includes the main water inlet, the main water outlet, the first water inlet, the first water outlet and the first electrode assembly, and the first water inlet is located at one side of the first electrode assembly, and the first water outlet is located at the other side of the first electrode assembly. Hence the water softening path is relatively long, which improves softening efficiency of the water softener.

### BRIEF DESCRIPTION OF THE DRAWINGS

FIG. 1 is a perspective view of a water softener according to the present application;
FIG. 2 is a schematic partial view of the water softener according to the present application;
FIG. 3 is a perspective view of an upper cover of the water softener according to the present application; and
FIG. 4 is another schematic partial view of the water softener according to the present application.

**Reference numerals:**

| | | | |
|---|---|---|---|
| 11 | housing body, | 111 | base wall, |
| 121 | first partition portion, | 122 | second partition portion, |
| 123 | third partition portion, | 124 | fourth partition portion, |
| 125 | fifth partition portion, | 126 | sixth partition portion, |
| 127 | seventh partition portion, | 128 | eighth partition portion, |
| 129 | ninth partition portion, | 1210 | tenth partition portion, |
| 131 | first side frame, | 132 | second side frame, |
| 133 | third side frame, | 134 | fourth side frame, |
| 14 | upper cover, | 141 | first base portion, |
| 1421 | first matching sub-portion, | 1422 | second matching sub-portion, |
| 1423 | third matching sub-portion, | 15 | blocking portion, |
| 16 | first flow cavity, | 17 | second flow cavity, |
| 18 | third flow cavity, | 19 | fourth flow cavity, |
| 2 | first electrode assembly, | 21 | first side wall, |
| 22 | second side wall, | 23 | third side wall, |
| 24 | fourth side wall, | 3 | second electrode assembly, |
| 31 | fifth side wall, | 32 | sixth side wall, |
| 33 | seventh side wall, | 34 | eighth side wall, |
| 4 | main water inlet, | 5 | main water outlet. |

### DETAILED DESCRIPTION OF THE EMBODIMENTS

Technical solutions of embodiments are illustrated hereinafter in conjunction with the drawings.

It should be noted that, although the present application is described in detail with reference to the embodiments, it should be understood by those skilled in the art that modifications, combinations or equivalent replacements can be made to the present application by those skilled in the art, and all technical solutions and modifications thereof without departing from the spirit or the scope of the present application are deemed to fall into the scope of the present application defined by the claims.

A water softener is provided, which is applicable to home appliances such as a dishwashers, a washing machine and the like, and certainly is applicable to other equipment or situations where softened water is needed.

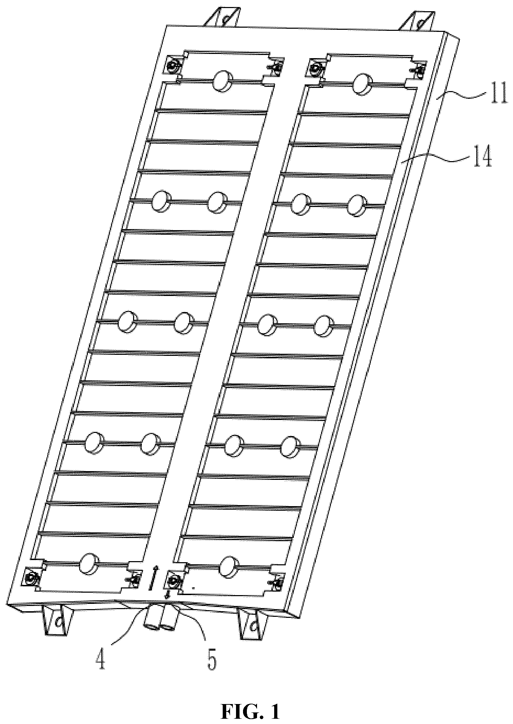

Referring to FIG.1 to FIG. 3, the water softener includes a housing and a first electrode assembly 2. The housing includes a housing body 11 and an upper cover 14, and the housing body 11 and the upper cover 14 are fixed in a sealed manner. The housing is provided with an accommodation cavity, and the first electrode assembly 2 is located in the accommodation cavity. The first electrode assembly includes multiple first electrode plates and multiple second electrode plates. The multiple first electrode plates and the multiple second electrode plates have opposite polarities, and are arranged alternatively. Water flow channels are formed between the multiple first electrode plates and the multiple second electrode plates.

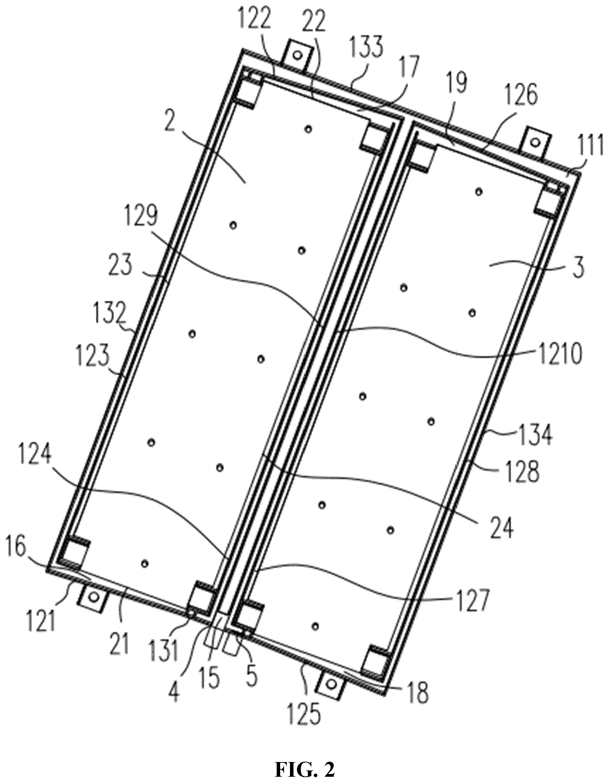

Referring to FIG. 2, the first electrode assembly 2 is roughly of a plate shape. The water softener is provided with a main water inlet 4 and a main water outlet 5, and the first electrode assembly 2 is provided with a first water inlet and a first water outlet. The first water inlet is located at one side of the first electrode assembly 2, and the first water outlet is located at the other side of the first electrode assembly 2. The main water inlet 4 is in communication with the first water inlet, and the main water outlet 5 is in communication with the first water outlet.

Such water softener includes the main water inlet 4, the main water outlet 5, the first water inlet, the first water outlet and the first electrode assembly 2, and the first water inlet is located at one side of the first electrode assembly 2, the first water outlet is located at the other side of the first electrode assembly 2. Hence the water softening path is relatively long, which improves softening efficiency of the water softener.

Preferably, a portion between two adjacent end portions of every two adjacent electrode plates forms a sub-portion of the first water inlet, which is not described in detail herein.

Referring to FIG. 2, the first electrode assembly 2 includes a first side wall 21, a second side wall 22, a third side wall 23 and a fourth side wall 24. The first side wall 21 is roughly perpendicular to the second side wall 22, the first side wall 21 is roughly parallel to the third side wall 23, and the third side wall 23 is roughly perpendicular to the fourth side wall 24.

Referring to FIG. 2, the housing body 11 includes a base wall 111. The housing includes a first partition portion 121, a second partition portion 122, a third partition portion 123 and a fourth partition portion 124. All of the first partition portion 121, the second partition portion 122, the third partition portion 123 and the fourth partition portion 124 extend out of the base wall 111, and extend from the base wall towards the upper cover 14.

Referring to FIG. 2, the first partition portion 121 faces the one side of the first electrode assembly 2, and faces the first side wall 21. The water softener includes a first flow cavity 16 in communication with the first water inlet, and the first flow cavity 16 is located between the first partition portion 121 and the first side wall 21.

Referring to FIG. 2, the second partition portion 122 faces the other side of the first electrode assembly 2. The water softener includes a second flow cavity 17. The second partition portion 122 faces the second side wall 22. The second flow cavity 17 is in communication with the first water outlet and is located between the second partition portion 122 and the second side wall 22.

Referring to FIG. 2, the housing includes the third partition portion 123 and the fourth partition portion 124. The third partition portion 123 faces the third side wall 23, and the fourth partition portion 124 faces the fourth side wall 24. The third partition portion 123 is connected to the third side wall 23 in a sealed manner, and the fourth partition portion 124 is connected to the fourth side wall 24 in a sealed manner, which improves the softening efficiency.

The above sealed connections may be realized by directly abutting against the third partition portion 123 and the fourth partition portion 124 (including being inserted to the partition portion), or by a sealer provided between the first electrode assembly 2 and the third partition portion 123 and between the first electrode assembly 2 and the fourth partition portion 124, which is not described in detail herein.

Referring to FIG. 2, the water softener includes a second electrode assembly 3 located in the accommodation cavity, and the second electrode assembly 3 is roughly of a plate shape. The second electrode assembly 3 is provided with a second water inlet and a second water outlet. The second water inlet is located at one side of the second electrode assembly 3, and the second water outlet is located at the other side of the second electrode assembly 3. The main water inlet 4 is in communication with the second water inlet, and the main water outlet 5 is in communication with the second water outlet, so as to increase the amount of water softened by the water softener.

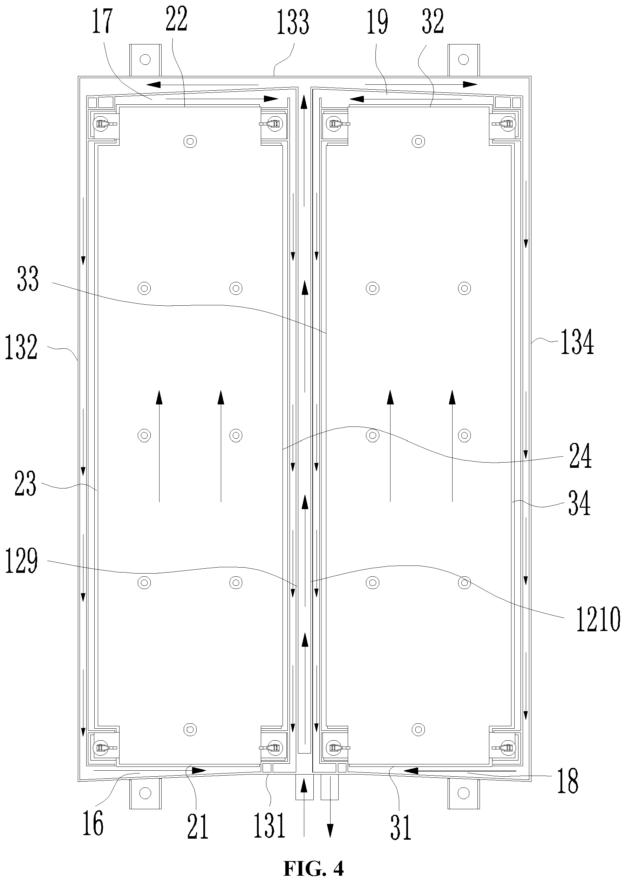

Referring to FIG. 2 and FIG. 4, the second electrode assembly 3 includes a fifth side wall 31, a sixth side wall 32, a seventh side wall 33 and an eighth side wall 34. The fifth side wall 31 is roughly perpendicular to the sixth side wall 33, the fifth side wall 31 is roughly parallel to the seventh side wall 33, and the seventh side wall 33 is roughly perpendicular to the eighth side wall 34.

Referring to FIG. 2, the housing includes a fifth partition portion 125, a sixth partition portion 126, a seventh partition portion 127 and an eighth partition portion 128. The fifth partition portion 125 faces the fifth side wall 33, the sixth partition portion 126 faces the sixth side wall 32, the seventh partition portion 127 faces the seventh side wall 33, and the eighth partition portion 128 faces the eighth side wall 34. The seventh partition portion 127 is connected to the seventh side wall 33 in a sealed manner, and the eighth partition portion 128 is connected to the eighth side wall 34 in a sealed manner, which improves the water softening efficiency.

The fifth partition portion 125, the sixth partition portion 126, the seventh partition portion 127 and the eighth partition portion 128 all extend out of the base wall 111, which is not described in detail herein.

Referring to FIG. 2, the housing includes a first side frame 131, a second side frame 132, a third side frame 133 and a fourth side frame 134. The first partition portion 121 forms a part of the first side frame 131, and the second side frame 132 is spaced apart from the third partition portion 123. The third side frame 133 is spaced apart from the second partition portion 122, and is spaced apart from the sixth partition portion 126. The fourth side frame 134 is spaced apart from the eighth partition portion 128, and the fifth partition portion 125 forms another part of the first side frame 131.

Referring to FIG. 2, a gap is provided between an end portion of the third partition portion 123 away from the second partition portion 122 and the first side frame 131, another gap is provided between an end portion of the fourth partition portion 124 away from the first side frame 131 and the second partition portion 122, yet another gap is provided between an end portion of the seventh partition portion 127 away from the first side frame 131 and the sixth partition portion 126, and still another gap is provided between an end portion of the eighth partition portion 128 away from the sixth partition portion 126 and the first side frame 131, where the gaps are configured for the water to flow through.

Referring to FIG. 2, the housing includes a ninth partition portion 129 and a tenth partition portion 1210. The ninth partition portion 129 and the tenth partition portion 1210 are located between the fourth partition portion 124 and the seventh partition portion 127. The fourth partition portion 124, the ninth partition portion 129, the tenth partition portion 1210 and the seventh partition portion 127 are roughly parallel to each other, and are spaced apart from each other. The ninth partition portion 129 is located between the second partition portion 122 and the first side frame 131, and the tenth partition portion 1210 is located between the sixth partition portion 126 and the first side frame 131. In this way, the water flow path is lengthened, and flow velocity is reduced, which improves the water softening performance.

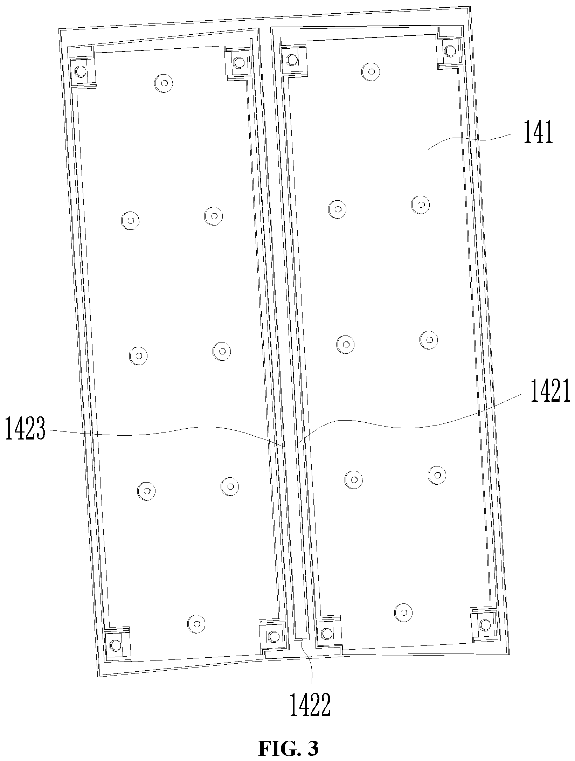

Referring to FIG. 3, the housing includes an upper cover 14. The upper cover 14 includes a first base portion 141 and a matching portion protruding with respect to the first base portion 141. The matching portion is roughly of a U shape, and includes a first matching sub-portion 1421, a second matching sub-portion 1422 and a third matching sub-portion 1423. The ninth partition portion 129 is fixed to the first matching sub-portion 1421 in a sealed manner, and the tenth partition portion 1210 is fixed to the third matching sub-portion 1423 in a sealed manner.

The housing includes a blocking portion 15 arranged close to the main water inlet 4. The blocking portion 15 is fixed to the first side frame 131, the ninth partition portion 129 and the tenth partition portion 1210 in a sealed manner. The second matching sub-portion 1422 is fixed to the blocking portion 15 in a sealed manner. A gap is provided between the first base portion 141 and the blocking portion 15. The gap is roughly located between the second matching sub-portion 1422 and the first side frame 131, and the main water outlet 5 is in communication with the gap.

Referring to FIG. 2 and FIG. 4, the water softener includes a primary flow channel located between the ninth partition portion 129 and the tenth partition portion 1210, a first secondary flow channel located between the second partition portion 122 and the third side frame 133, a second secondary flow channel located between the third partition portion 123 and the second side frame 132, a third secondary flow channel located between the fourth partition portion 124 and the ninth partition portion 129, a fourth secondary flow channel located between the sixth partition portion 126 and the third side frame 133, a fifth secondary flow channel located between the eighth partition portion 128 and the fourth side frame 134, a third flow cavity located between the fifth side wall 31 and the fifth partition portion 125, a fourth flow cavity located between the sixth side wall 32 and the sixth partition portion 126, and a sixth secondary flow channel located between the seventh partition portion 127 and the tenth partition portion 1210.

Referring to FIG. 2 and FIG. 4, the gap between the first base portion 141 and the blocking portion 15 is in communication with the third secondary flow channel and the sixth secondary flow channel. The water softener further includes the main water outlet 5 located at the first side frame 131, and the main water outlet 5 is in communication with the gap. The main water inlet 4 is located at the first side frame 131 and is in communication with the primary flow channel, which facilitates installation.

Referring to FIG. 2 and FIG. 4, during operation of the water softener, one of flow paths of water is: the main water inlet 4 → the primary flow channel → the first secondary flow channel → the second secondary flow channel → the first flow cavity 16 → the water flow channels of the first electrode assembly 2 → the second flow cavity 17 → the third secondary flow channel → the gap between the first base portion 141 and the blocking portion 15 → the main water outlet 5. The other one of the flow paths of water is: the main water inlet 4 → the primary flow channel → the fourth secondary flow channel → the fifth secondary flow channel → the third flow cavity 18 → water flow channels of the second electrode assembly 3 → the fourth flow cavity 19 → the sixth secondary flow channel → the main water outlet 5. In this way, the amount of water softened by the water softener is increased, confluence of softened water and raw water is reduced, and the water softening performance is improved.

Alternatively, the upper cover 14 may be a plate, a surface of the blocking portion 15 away from the base wall 111 is closer to the base wall 111 than a surface of the first side frame 131 away from the base wall 111, a surface of the ninth partition portion 129 away from the base wall 111, and, a surface of the tenth partition portion 1210, which is not described in detail herein.

Referring to FIG. 2, an angle between a projection of the first partition portion 121 in a thickness direction of the first electrode assembly 2 and a projection of the one side of the first electrode assembly 2 in the thickness direction of the first electrode assembly 2 is Θ, where 5°≤θ≤30°. The first partition portion 121 is inclined with respect to the first side wall 21, such that flow velocity of water in the first electrode assembly 2 is more uniform.

Referring to FIG. 2, the second partition portion 122 is inclined with respect to the second side wall 22. For example, the first partition portion 121 is roughly parallel to the second partition portion 122. In a case that the water softener is installed vertically, the softened water can be slowed down, and the pressure of the softened water can be increased, which facilitates flowing of the water, and will not be described in detail herein.

Referring to FIG. 2, the third side frame 133 is roughly parallel to the second side wall 22, and the second partition portion 122 is inclined with respect to the third side frame 133, which facilitates flowing of the water. The third side frame 133 is roughly parallel to the sixth side wall 32, and the sixth partition portion 126 is inclined with respect to the third side frame 133, which facilitates flowing of the water, and will not be described in detail herein.

Although the embodiments of the present application are illustrated and described hereinbefore, it should be understood that the embodiments are exemplary, and should not be construed as a limitation to the scope of the present application, and variations, modifications or replacements may be made to the embodiments of the present application by those skilled in the art without departing from the scope of the present application.

## Claims

1. A water softener, comprising a housing and a first electrode assembly (2), wherein
the housing is provided with an accommodation cavity, the first electrode assembly (2) is located in the accommodation cavity, and the first electrode assembly (2) is roughly of a plate shape;
the water softener is provided with a main water inlet (4) and a main water outlet (5), and the first electrode assembly (2) is provided with a first water inlet and a first water outlet; and
the first water inlet is located at one side of the first electrode assembly (2), the first water outlet is located at the other side of the first electrode assembly (2), the main water inlet (4) is in communication with the first water inlet, and the main water outlet (5) is in communication with the first water outlet.

2. The water softener according to claim 1, wherein
the housing comprises a first partition portion (121), and the first partition portion (121) faces the one side of the first electrode assembly (2); and
the water softener comprises a first flow cavity (16) in communication with the first water inlet, and the first flow cavity (16) is located between the first partition portion (121) and the one side of the first electrode assembly (2).

3. The water softener according to claim 2, wherein an angle between a projection of the first partition portion (121) in a thickness direction of the first electrode assembly (2) and a projection of the one side of the first electrode assembly (2) in the thickness direction of the first electrode assembly (2) is θ, wherein 5°≤θ≤30°.

4. The water softener according to claim 2, wherein
the housing comprises a second partition portion (122), and the second partition portion (122) faces the other side of the first electrode assembly (2); and
the water softener comprises a second flow cavity (17) in communication with the first water outlet, and the second flow cavity (17) is located between the second partition portion (122) and the other side of the first electrode assembly (2).

5. The water softener according to claim 4, wherein
the first electrode assembly (2) comprises a first side wall (21), a second side wall (22), a third side wall (23) and a fourth side wall (24), wherein the first side wall (21) is roughly perpendicular to the second side wall (22), the first side wall (21) is roughly parallel to the third side wall (23), and the third side wall (23) is roughly perpendicular to the fourth side wall (24);
the first partition portion (121) faces the first side wall (21), the first flow cavity (16) is located between the first partition portion (121) and the first side wall (21), the second partition portion (122) faces the second side wall (22), and the second flow cavity (17) is located between the second partition portion (122) and the second side wall (22); and
the housing comprises a third partition portion (123) and a fourth partition portion (124), wherein the third partition portion (123) faces the third side wall (23), the fourth partition portion (124) faces the fourth side wall (24), the third partition portion (123) is connected to the third side wall (23) in a sealed manner, and the fourth partition portion (124) is connected to the fourth side wall (24) in a sealed manner.

6. The water softener according to claim 5, wherein
the water softener comprises a second electrode assembly (3) being located in the accommodation cavity, and the second electrode assembly (3) is roughly plate-shaped;
the second electrode assembly (3) is provided with a second water inlet and a second water outlet, the second water inlet is located at one side of the second electrode assembly (3), the second water outlet is located at the other side of the second electrode assembly (3); and
the main water inlet (4) is in communication with the second water inlet, and the main water outlet (5) is in communication with the second water outlet.

7. The water softener according to claim 6, wherein
the second electrode assembly (3) comprises a fifth side wall (31), a sixth side wall (32), a seventh side wall (33) and an eighth side wall (34), wherein the fifth side wall (31) is roughly perpendicular to the sixth side wall (32), the fifth side wall (31) is roughly parallel to the seventh side wall (33), and the seventh side wall (33) is roughly perpendicular to the eighth side wall (34); and
the housing comprises a fifth partition portion (125), a sixth partition portion (126), a seventh partition portion (127) and an eighth partition portion (128); wherein
the fifth partition portion (125) faces the fifth side wall (31), the sixth partition portion (126) faces the sixth side wall (32), the seventh partition portion (127) faces the seventh side wall (33), and the eighth partition portion (128) faces the eighth side wall (34); and
the seventh partition portion (127) is connected to the seventh side wall (33) in a sealed manner, and the eighth partition portion (128) is connected to the eighth side wall (34) in a sealed manner.

8. The water softener according to claim 7, wherein
the housing comprises a first side frame (131), a second side frame (132), a third side frame (133) and a fourth side frame (134);
the first partition portion (121) forms a part of the first side frame (131), the second side frame (132) is spaced apart from the third partition portion (123), the third side frame (133) is spaced apart from the second partition portion (122), the third side frame (133) is spaced apart from the sixth partition portion (126), the fourth side frame (134) is spaced apart from the eighth partition portion (128), and the fifth partition portion (125) forms another part of the first side frame (131);
a gap is provided between an end portion of the third partition portion (123) away from the second partition portion (122) and the first side frame (131), another gap is provided between an end portion of the fourth partition portion (124) away from the first side frame (131) and the second partition portion (122), yet another gap is provided between an end portion of the seventh partition portion (127) away from the first side frame (131) and the sixth partition portion (126), and still another gap is provided between an end portion of the eighth partition portion (128) away from the sixth partition portion (126) and the first side frame (131);
the housing comprises a ninth partition portion (129) and a tenth partition portion (1210), the ninth partition portion (129) and the tenth partition portion (1210) are located between the fourth partition portion (124) and the seventh partition portion (127);
the fourth partition portion (124), the ninth partition portion (129), the tenth partition portion (1210) and the seventh partition portion (127) are roughly parallel to each other, and are spaced apart from each other, the ninth partition portion (129) is located between the second partition portion (122) and the first side frame (131), and the tenth partition portion (1210) is located between the sixth partition portion (126) and the first side frame (131); and
the main water inlet (4) and the main water outlet (5) are located at the first side frame (131).

9. The water softener according to claim 8, wherein
the housing comprises an upper cover (14), the upper cover (14) comprises a first base portion (141) and a matching portion protruding with respect to the first base portion (141), and the matching portion is roughly U-shaped;
the matching portion comprises a first matching sub-portion (1421), a second matching sub-portion (1422) and a third matching sub-portion (1423), the ninth partition portion (129) is fixed to the first matching sub-portion (1421) in a sealed manner, and the tenth partition portion (1210) is fixed to the third matching sub-portion (1423) in a sealed manner;
the housing comprises a blocking portion (15) arranged close to the main water inlet (4), the blocking portion (15) is fixed to the first side frame (131), the ninth partition portion (129) and the tenth partition portion (1210) in a sealed manner, and the second matching sub-portion (1422) is fixed to the blocking portion (15) in a sealed manner; and
a gap is provided between the first base portion (141) and the blocking portion (15), the gap is roughly located between the second matching sub-portion (1422) and the first side frame (131), and the main water outlet (5) is in communication with the gap.
